# EUROPÄISCHE PATENTSCHRIFT

(11) **EP 1 142 208 B1**
(45) Veröffentlichungstag und Bekanntmachung des Hinweises auf die Patenterteilung: **22.03.2006**
(21) Anmeldenummer: 00904832.3
(22) Anmeldetag: 04.01.2000
(51) Int. Cl.: H04L 12/40, H04L 29/14

(54) **VERFAHREN UND EINRICHTUNG ZUR SENDESIGNALÜBERWACHUNG**
METHOD AND DEVICE FOR TRANSMISSION SIGNAL CONTROL
PROCEDE ET DISPOSITIF POUR LA SURVEILLANCE D'UN SIGNAL D'EMISSION

(30) Priorität: 14.01.1999 DE 19901193
(43) Veröffentlichungstag der Anmeldung: 10.10.2001
(73) Patentinhaber: SIEMENS AKTIENGESELLSCHAFT, 80333 München (DE)
(72) Erfinder: FICHTNER, Norbert, D-84069 Schierling (DE); MUNZ, Dieter, D-91315 Höchstadt (DE)
(86) Internationale Anmeldenummer: PCT/DE2000/000035
(87) Internationale Veröffentlichungsnummer: WO 2000/041458

(56) Entgegenhaltungen:
- EP-A- 0 664 628
- US-A- 5 751 746

## Beschreibung

Die Erfindung bezieht sich zunächst auf ein Verfahren zum Senden und Empfangen gemäß dem Oberbegriff des Anspruchs 1, sowie auf eine Sende- und Empfangsstufe gemäß dem Oberbegriff des Anspruchs 2, wobei zur Funktionskontrolle ein abgesandtes Signal mit einem zurücklaufenden Signal verglichen wird. Das zurücklaufende Signal gibt hierbei das abgesandte Signal wieder.

Die Erfindung bezieht sich insbesondere auf ein Verfahren und auf eine Einrichtung zum Senden und Empfangen bei einem Bus der Gebäudesystemtechnik, der Energie und Nachrichtensignale führt, insbesondere beim Bus der EIBA (European Installation Bus Association). Bei einem derartigen Bus wird zur Funktionskontrolle ein abgesandtes Nachrichtensignal mit dem vom Bus zurücklaufenden Nachrichtensignal verglichen.

Bei derartigen Bussystemen vergleicht ein Busankoppler eines sendenden Busteilnehmers sein Sendesignal mit dem vom Bus zurücklaufenden Signal, das von einem anderen Teilnehmer zur Funktionskontrolle zurückgesandt wird. Durch einen derartigen Vergleich kann man einen Fehler der Sendestufe oder der Empfangsstufe detektieren. Sind das abgesandte und das zurücklaufende Signal unterschiedlich, wird dies als Fehlermeldung vom System verstanden. Die Sendestufe wird dann gesperrt, um ein fehlerhaftes Verhalten des Teilnehmers und eine Störung des Systems zu vermeiden. Nach diesem Prinzip arbeiten auch andere Einrichtungen. Eine derartige Fehlermeldung entsteht aber auch unbegründet bei funktionierender Sendestufe, wenn die Bordnetzspannung beispielsweise infolge eines Spannungszusammenbruchs auf dem Bus soweit absinkt, dass die Auswertung im Vergleich der gesendeten Nachricht und der rücklaufenden Nachricht nicht mehr ordnungsgemäß möglich ist. In einem solchen Fall würde die Sendestufe unbegründet gesperrt und der Teilnehmer ohne Grund abgeschaltet.

Die Funktion einer Einrichtung zur Kommunikationsüberwachung ist bereits aus der EP 0 664 628 A2 bekannt. Hierbei wird ein Bus mit zwei Leitungen auf seine Funktionsfähigkeit überprüft. Sofern eine von beiden Leitungen nicht funktioniert, erkennt die Einrichtung den Fehler und gibt ein Fehlersignal aus.

Dieses bewirkt, dass ein der fehlerbehafteten Leitung zugeordnetes Kommunikationsbauteil, welches zur Sendeprioritätssteuerung dient, funktionslos und damit geschützt wird. Andererseits wird durch einen Auswahlvorgang in der Einrichtung das System auf eine Kommunikation über nur eine Busleitung umgeschaltet.

Insgesamt betrachtet, dient diese Einrichtung zur Kommunikationsüberwachung und ggf. zur Aufrechterhaltung der Kommunikation über nur eine Busleitung. Die Rückkopplung über den jeweiligen Zustand der Einrichtung und des Busses erfolgt dabei ähnlich einem Regelkreis, wobei die Busleitungen als Teil des Regelkreises genutzt werden.

Nachteilig ist hierbei, dass unabhängig vom Fehler eine Abschaltung einzelner Kommunikationsbauteile erfolgt. Die Rückkopplung über die Busleitungen kann ebenfalls zu Störungen führen.

Der Erfindung liegt die Aufgabe zugrunde, ein Verfahren zum Senden und Empfangen zu entwickeln, bei dem die Überwachung des Sendesignals nicht zu unbegründeten Abschaltungen führt.

Die Lösung der geschilderten Aufgabe erfolgt nach der Erfindung durch ein Verfahren nach Anspruch 1. Dadurch wird sichergestellt, dass die Sendeschaltung nur bei einem Fehler abgeschaltet wird, nicht jedoch bei Spannungseinbrüchen.

Dabei wird bei einem Bus derart verfahren, dass im Falle eines Spannungseinbruchs auf dem Bus unter einen vorgegebenen Wert, bei dem das vom Bus zurücklaufenden Nachrichtensignal nicht mehr hinreichend sicher auswertbar ist, abzusendende Nachrichtensignale direkt dem Empfänger zugeführt werden. Hierdurch wird die Überwachung ohne Umweg über den Bus unmittelbar durchgeführt, so dass bei Absenden eines Signals auch ein Vergleich möglich ist.

Die Lösung der geschilderten Aufgabe erfolgt auch durch eine Sende- und Empfangsstufe nach Anspruch 2. Es wird wieder davon ausgegangen, dass zur Funktionskontrolle ein abgesandtes Nachrichtensignal mit dem vom Bus zurücklaufenden Nachrichtensignal verglichen wird, wobei eine Nichtübereinstimmung zum Setzen eines Fehlerflags führt und die Station sperrt. Die Lösung der geschilderten Aufgabe erfolgt dadurch, dass der Empfänger an seinem Ausgang mit einer ODER-Schaltung verbunden ist, wobei der Eingang des Senders mit einer UND-Schaltung in Verbindung steht, mit der auch ein Ausgang einer Einrichtung zum Überwachung der Busspannung verbunden ist. Hierbei ist der Ausgang der UND-Schaltung auch mit einem Eingang der ODER-Schaltung verbunden. Bei einer Busspannung unterhalb eines vorgegebenen Wertes der Einrichtung für die Spannungsüberwachung wird an die UND-Schaltung ein Signal abgegeben. Wenn zugleich ein Sendesignal ansteht, gibt die UND-Schaltung ein Signal an den einen Eingang der ODER-Schaltung weiter, die unabhängig davon, ob ein Signal zurückläuft, ein Signal weitergibt, wie es bei einer intakten Sendeschaltung der Fall ist. Bei ausreichender Spannung gibt die Spannungsüberwachung kein Signal ab, so dass auch von der UND-Schaltung kein Signal weitergegeben wird. Bei empfangenem Signal gibt die ODER-Schaltung ein Signal weiter, wie es einer funktionierenden Sendestufe entspricht. Wenn der Sender defekt ist, kann kein rücklaufendes Signal empfangen werden, so dass an der ODER-Schaltung vom Empfänger kein Signal ansteht. Bei intakter Spannung gibt die Spannungsüberwachung an die UND-Schaltung kein Signal ab. Die am Sender anstehende Sendespannung gelangt zwar als Signal zur UND-Schaltung, die jedoch kein Signal weitergeben kann, da an ihrem zweiten Signal kein Signal ansteht. Wenn der Sender defekt ist, kann der Empfänger kein rücklaufendes Signal empfangen, so dass zur ODER-Schaltung kein Signal gelangt, so dass sie auch kein Signal abgeben kann. Die Schaltung wirkt im Fall eines Spannungseinbruchs so, als würde das Sendesignal direkt zum Empfänger, ohne über einen Bus zu laufen, zurückgeleitet würde. Hierbei geben die UND-Schaltung und die ODER-Schaltung die Form eines anstehenden Signals durch, wenn sie in der Lage sind, ein Signal abzugeben.

Vor dem Eingang des Senders und hinter dem Ausgang des Empfängers kann eine Signalvergleichseinrichtung angeordnet sein, die das zum Sender laufende Sendesignal mit dem vom Empfänger erhaltenen Signal vergleichen und auswerten kann.

Die Sende- und Empfangsstufe und bzw. oder die Vergleichseinrichtung können als integrierte Schaltung, als IC, ausgeführt sein. Die geschilderten Schaltungsanordnungen sind dafür besonders geeignet.

Die integrierte Schaltung kann vom Typ eines sogenannten UARTs sein. Eine solche UART IC-Schaltung kann für verdrillte Leitungen als TPUART ausgeführt sein. UART steht für Universal Asynchronous Receiver Transmitter und TP vor UART steht für Twisted Pair.

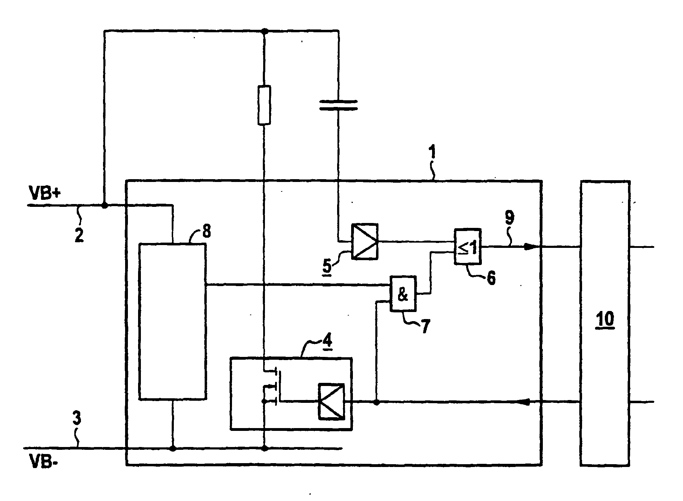

Die Erfindung soll nun anhand eines in der Zeichnung grob schematisch wiedergegebenen Ausführungsbeispiels, welches einen Funktionsschaltplan einer Sende- und Empfangsstufe zeigt, näher erläutert werden:

Die Einrichtung zur Sendesignalüberwachung arbeitet mit einer Sende- und Empfangsstufe 1 für einen Bus mit den Busleitern 2 für VB+ mit dem positiven Buspotential und dem Busleiter 3 für VB- mit dem negativen Buspotential. Diese Art ist für den Bus der EIBA typisch, die Einrichtung funktioniert jedoch entsprechend auch für andere Buseinrichtungen oder andere Leitungssysteme in einer Schaltungsanordnung. Diese Leiter nehmen dann die Funktion eines Busses im Sinne der Erfindung wahr. In der Sende- und Empfangsstufe 1 sind ein Sender 4 und ein Empfänger 5 ausgeführt. Die einzelnen Bauelemente können in ihren Funktionen in einer integrierten Schaltung, in einem IC, insbesondere in einem UART, ausgebildet sein. Zur Funktionskontrolle des Senders 4 wird ein abgesandtes Nachrichtensignal mit dem vom Bus zum Empfänger 5 zurücklaufenden Nachrichtensignal verglichen. Im Falle eines Fehlers, wenn der Sender also nicht funktionstüchtig ist, wird die Station gesperrt und die Sperrung kenntlich gemacht. Das Kennzeichen für die Sperrung wird üblicherweise als Fehlerflag bezeichnet. Der Empfänger 5 ist an seinem Ausgang mit einer ODER-Schaltung 6 verbunden, wobei der Eingang des Senders 4 mit einer UND-Schaltung 7 in Verbindung steht. Die UND-Schaltung 7 steht auch mit einem Ausgang einer Einrichtung 8 zur Überwachung der Busspannung in Verbindung. Der Ausgang der UND-Schaltung 7 ist mit dem Eingang der ODER-Schaltung 6 verbunden. Die Spannungsüberwachung gibt bei Unterschreiten eines vorgegebenen Wertes der Busspannung ein Signal an die UND-Schaltung ab. Die Einrichtung wirkt so, dass ein am Sender 4 anstehendes Sendesignal direkt zum Empfänger 5 ohne den Umweg über die Busleitung zurückgegeben wird. Im Ausführungsbeispiel wird es auf die Empfangsleitung 9 über die ODER-Schaltung 6 eingekoppelt. Ein Vergleich des Sendesignals mit dem Empfängersignal kann in einer Vergleichseinrichtung 10 erfolgen, die im Ausführungsbeispiel vor dem Eingang des Sender 4 und hinter dem Ausgang des Empfängers 5 angeordnet ist. Die Sende- und Empfangsstufe 1 kann ebenso wie die Vergleichseinrichtung 10 in einem integrierten Schaltkreis, auch in einem gemeinsamen integrierten Schaltkreis, ausgeführt sein. Insbesondere kann die Sende- und Empfangsstufe 1 als UART und für einen Bus mit verdrillter Zweidrahtleitung als TPUART ausgeführt sein.

## Patentansprüche

1. Verfahren zum Senden und Empfangen bei einem Bus (2, 3) der Gebäudesystemtechnik, der Energie und Nachrichtensignale führt,
insbesondere beim Bus der EIBA (European Installation Bus Association),
wobei zur Funktionskontrolle
ein von einem Sender (4) abgesandtes Nachrichtensignal mit dem vom Bus (2, 3) zurücklaufenden Nachrichtensignal verglichen wird,
**dadurch gekennzeichnet, daß**
die Busspannung überwacht wird und
im Falle eines Spannungseinbruchs auf dem Bus (2, 3) unter einen vorgegebenen Wert, bei dem das vom Bus (2, 3) zurücklaufende Nachrichtensignal nicht mehr hinreichend sicher auswertbar ist,
ein abzusendendes, dem Sender (4) zugeführtes Nachrichtensignal innerhalb einer Sende- und Empfangsstufe (1) direkt zu einer Empfangsleitung (9) ohne Umweg über den Bus (2, 3) zurückgeführt wird und an Stelle des nicht auswertbaren Nachrichtensignals mit sich selbst verglichen wird.

2. Sende- und Empfangsstufe (1) für einen Bus (2, 3) der Gebäudesystemtechnik, der Energie und Nachrichtensignale führt,
insbesondere beim Bus der EIBA (European Installation Bus Association),
wobei zur Funktionskontrolle ein abgesandtes Nachrichtensignal mit dem vom Bus (2, 3) zurücklaufenden Nachrichtensignal verglichen wird,
wobei eine Nichtübereinstimmung zum Setzen eines Fehlerflags führt und die Sendestufe (1) sperrt,
**dadurch gekennzeichnet, daß**
der Empfänger (5) an seinem Ausgang mit einer ODER-Schaltung (6) verbunden ist,
wobei der Eingang des Senders (4) mit einer UND-Schaltung (7) in Verbindung steht, mit der auch ein Ausgang einer Einrichtung (8) zum Überwachen der Busspannung verbunden ist,
wobei der Ausgang der UND-Schaltung (7) auch mit einem Eingang der ODER-Schaltung (6) verbunden ist.

3. Einrichtung nach Anspruch 2, **dadurch gekennzeichnet, dass** vor dem Eingang des Senders (4) und hinter dem Ausgang des Empfängers (5) eine Signalvergleichseinrichtung (10) angeordnet ist.

4. Einrichtung nach Anspruch 2 oder 3, **dadurch ge-kennzeichnet, dass** die Sende- und Empfangsstufe (1) und bzw. oder die Vergleichseinrichtung (10) als IC ausgeführt ist.

5. Einrichtung nach Anspruch 4, **dadurch ge-kennzeichnet, dass** der IC vom Typ eines sogenannten Universal Asynchronous Receiver Transmitter (UART) ist.

6. Einrichtung nach Anspruch 5, **dadurch ge-kennzeichnet, dass** der Universal Asynchronous Receiver Transmitter (UART) für verdrillte Leitungen als Twisted Pair Universal Asynchronous Receiver Transmitter (TPUART) ausgeführt ist.

## Claims

1. Method for transmitting and receiving in the context of a bus (2, 3) used in building systems technology, which bus carries power and message signals,
in particular the bus of the EIBA (European Installation Bus Association),
wherein for the purpose of function control a message signal transmitted by a transmitter (4) is compared with the message signal returning from the bus (2, 3),
**characterised in that**
the bus voltage is monitored and
if the voltage on the bus (2, 3) dips below a predefined value, where the message signal being returned by the bus (2, 3) can no longer be interpreted with sufficient reliability,
a message signal which is to be transmitted and which is supplied to the transmitter (4) within a transmit and receive stage (1) is returned directly to a receive line (9) without being rerouted via the bus (2, 3) and is compared with itself instead of the message signal which cannot be interpreted.

2. Transmit and receive stage (1) for a bus (2, 3) used in building systems technology, which bus carries power and message signals,
in particular the bus of the EIBA (European Installation Bus Association), wherein for the purpose of function control a transmitted message signal is compared with the message signal returning from the bus (2, 3),
wherein an error flag is set and the transmit stage (1) is disabled if the signals do not match,
**characterised in that**
the receiver (5) is connected at its output to an OR circuit (6),
the input of the transmitter (4) being connected to an AND circuit (7) to which an output of a device (8) for monitoring the bus voltage is also connected,
the output of the AND circuit (7) also being connected to an input of the OR circuit (6).

3. Device according to claim 2, **characterised in that** a signal comparison device (10) is disposed upstream of the input of the transmitter (4) and downstream of the output of the receiver (5).

4. Device according to claim 2 or 3, **characterised in that** the transmit and receive stage (1) and/or the comparison device (10) is implemented as an IC.

5. Device according to claim 4, **characterised in that** the IC is of what is referred to as the Universal Asynchronous Receiver Transmitter (UART) type.

6. Device according to claim 5, **characterised in that** the Universal Asynchronous Receiver Transmitter (UART) is implemented for twisted-pair lines as a Twisted Pair Universal Asynchronous Receiver Transmitter (TPUART).

## Revendications

1. Procédé d'émission et de réception sur un bus (2, 3) de la technique des systèmes pour édifices dans lequel passe de l'énergie et des signaux d'information, en particulier sur le bus EIBA (European Installation Bus Association),
un signal d'information envoyé par un émetteur (4) étant comparé au signal d'information renvoyé par le bus (2, 3) afin de contrôler les fonctions,
**caractérisé en ce que**
l'on surveille la tension de bus et
en cas de chute de tension sur le bus (2, 3) au-dessous d'une valeur prédéterminée pour laquelle le signal d'information renvoyé le bus (2, 3) ne peut plus être exploité avec une sûreté suffisante,
un signal d'information à émettre et amené à l'émetteur (4) est ramené directement à une ligne de réception (9) dans un étage d'émission et de réception (1) sans passer par le bus (2, 3) et est comparé à lui-même à la place du signal d'information inexploitable.

2. Étage d'émission et de réception (1) pour un bus (2, 3) de la technique des systèmes pour édifices, dans lequel passe de l'énergie et des signaux d'information, en particulier sur le bus EIBA (European Installation Bus Association),
un signal d'information envoyé par un émetteur (4) étant comparé au signal d'information renvoyé par le bus (2, 3) afin de contrôler les fonctions,
une absence de concordance entraînant la levée d'un drapeau d'erreur et bloquant l'étage d'émission (1),
**caractérisé en ce que**
le récepteur (5) est relié à sa sortie à un circuit ou (6),
l'entrée de l'émetteur (4) est relié à un circuit ET (7) auquel est également reliée une sortie d'un dispositif (8) de surveillance de la tension de bus,
la sortie du circuit ET (7) est également reliée à une entrée du circuit ou (6).

3. Dispositif selon la revendication 2, **caractérisé en ce qu'**un dispositif de comparaison de signaux (10) est placé en amont de l'entrée de l'émetteur (4) et en aval de la sortie du récepteur (5).

4. Dispositif selon la revendication 2 ou 3, **caractérisé en ce que** l'étage d'émission et de réception (1) et/ou le dispositif de comparaison (10) sont réalisés sous la forme d'un circuit intégré IC.

5. Dispositif selon la revendication 4, **caractérisé en ce que** le circuit intégré IC est du type appelé Universal Asynchronous Receiver Transmitter (UART).

6. Dispositif selon le revendication 5, **caractérisé en ce que** le Universal Asynchronous Receiver Transmitter (UART) pour lignes torsadées est réalisé sous la forme de Twisted Pair Universal Asynchronous Receiver Transmitter (TPUART).
